# EUROPÄISCHE PATENTSCHRIFT

(11) **EP 2 385 357 B1**
(45) Veröffentlichungstag und Bekanntmachung des Hinweises auf die Patenterteilung: **26.12.2012**
(21) Anmeldenummer: 11161726.2
(22) Anmeldetag: 08.04.2011
(51) Int. Cl.: G01H 9/00

(54) **Faseroptischer Vibrationssensor**
Fibre optic vibration sensor
Capteur de vibrations à fibre optique

(30) Priorität: 06.05.2010 DE 102010019813
(43) Veröffentlichungstag der Anmeldung: 09.11.2011
(73) Patentinhaber: SIEMENS AKTIENGESELLSCHAFT, 80333 München (DE)
(72) Erfinder: Bosselmann, Thomas, 91080, Marloffstein (DE); Villnow, Michael, 90768 Fürth (DE); Willsch, Michael, 07745, Jena (DE)

(56) Entgegenhaltungen:
- WO-A1-96/08695
- DE-A1- 19 514 852
- US-A- 3 940 608
- US-A- 5 420 688
- US-B1- 7 714 271

## Beschreibung

Die Erfindung betrifft einen Faseroptischen Beschleunigungssensor, insbesondere zur Anwendung in einem Generator.

Generatoren im Kraftwerksbereich weisen unter anderem im Bereich des Wickelkopfes Schwingungen in der doppelten Netzfrequenz auf. Bei zu hohen Amplituden der Stabschwingungen können Schäden an der Isolierung bzw. am Kupfer auftreten. Die Schäden können zur Zerstörung des Generators führen. Da sich der Wickelkopf auf Hochspannungspotenzial befindet, werden zur Überwachung solcher Schwingungen zunehmend faseroptische Beschleunigungssensoren eingesetzt (sog. FOA = fiber optical accelerometer). Ein Beispiel für einen solchen FOA arbeitet mit einer mit einer optischen Faser verbundenen Schwungmasse, die durch die auftretende Beschleunigung ausgelenkt wird. Die Auslenkung kann beispielsweise auf ein Faser Bragg Gitter (FBG) übertragen werden, das dadurch gedehnt wird. Ein bekanntes Verfahren ist auch, die Auslenkung der Schwungmasse in eine Intensitätsänderung eines Lichtsignals umzuwandeln.

DE 195 14 852 A1 offenbart ein Beschleunigungsinterferometer. Nachteilig ist hierbei, dass eine Richtung der Auslenkung des Endes der verwendeten Glasfaser und somit das Vorzeichen der Beschleunigung nicht feststellbar sind. Außerdem können prinzipbedingt nur kleine Auslenkungen realisiert werden, was den mechanischen Aufbau schwierig macht und die Empfindlichkeit des Sensors einschränkt.

US 5,420,688 betrifft ebenfalls einen interferometrischen Beschleunigungssensor mit den beschriebenen Nachteilen.

US 3,940,608 offenbart einen optischen Abstandssensor.

US 7,714,271 B1 offenbart einen optischen Beschleunigungssensor mit einem Bragg Gitter.

WO 96/08695 A1 diskutiert einen Beschleunigungssensor mit einer Glasfaser, deren Ende verspiegelt ist.

Es ist Aufgabe der vorliegenden Erfindung, einen faseroptischen Beschleunigungssensor anzugeben, der einen vereinfachten Aufbau aufweist. Dabei sollen insbesondere wichtige Sensorparameter wie die Resonanzfrequenz und die Linearität der Sensorkennlinie geeignet eingestellt werden.

Diese Aufgabe wird durch einen faseroptischen Beschleunigungssensor mit den Merkmalen von Anspruch 1 gelöst. Die abhängigen Ansprüche betreffen vorteilhafte Ausgestaltungen der Erfindung.

Dabei wird erfindungsgemäß eine optische Faser verwendet, die ein freistehendes Ende aufweist. Das frei stehende Ende der optischen Faser wird durch die Trägheitskräfte ausgelenkt. Die Faserabschlussfläche am freistehenden Ende steht dicht vor einem schräg gestellten Spiegel. Wird die Glasfaser ausgelenkt, wird je nach Schwingungszustand mehr oder weniger Licht in die Glasfaser zurück reflektiert.

Der Abstand der Glasfaser vom Spiegel beträgt zwischen 25 und 75 µm. Mit der beschriebenen Konfiguration ergibt sich vorteilhaft eine relativ lineare Sensorkennlinie zwischen Beschleunigungswerten von 0 und 10 g mit einer Empfindlichkeit von etwa 1 %/g.

Erfindungsgemäß wird nur das Eigengewicht der Faser selbst als Schwungmasse verwendet. Mit anderen Worten wird im Gegensatz zu bekannten Sensoren dieser Art keine zusätzliche Schwungmasse am Ende der Faser angebracht. Dadurch wird der Aufbau des Beschleunigungssensors deutlich vereinfacht.

Um die Resonanzfrequenz ausreichend hoch gegenüber der Betriebsfrequenz zu halten, typischerweise 400 Hz, ist die Länge der Faser zweckmäßig klein genug zu wählen. Für eine hohe Empfindlichkeit hingegen ist eine möglichst große Faserlänge vorteilhaft.

In einer vorteilhaften Ausgestaltung der Erfindung wird für eine Standard-Multimode-Faser 62/125 µm eine Faserlänge zwischen 12 und 18 mm für das freistehende Ende verwendet. Insbesondere wird eine Faserlänge von zwischen 15 und 17 mm gewählt und gemäß einer vorteilhaften Ausgestaltung beträgt die Faserlänge 16 mm. Eine Faserlänge von 16 mm hat sich als vorteilhaft bezüglich der Resonanzfrequenz und Empfindlichkeit herausgestellt.

Um Rückreflexionen an der Abschlussfläche der optischen Faser zu vermeiden, wird gemäß einer vorteilhaften Ausgestaltung der Erfindung ein 8°-Bruch der Endfläche verwendet. Die azimutale Orientierung des Faserendes relativ zum Spiegel wird zweckmäßig so gewählt, dass der Bruch und die Spiegelfläche den maximal möglichen Winkel einschließen. Mit anderen Worten bilden Bruch und Spiegelfläche ein die Form eines "V". Durch die schräge Abschlussfläche wird das Licht etwas nach unten - unten mit Bezug auf die Form des "V" - aus der Faser gebrochen, um ca. 3,5°. Dadurch wird der effektive Einstrahlwinkel auf den Spiegel verringert.

In einer vorteilhaften Ausgestaltung der Erfindung wird der Spiegel um zwischen 9° und 13° gekippt. Die azimutale Orientierung des Faserendes relativ zum Spiegel wird zweckmäßig wieder so gewählt, dass der Bruch und die Spiegelfläche den maximal möglichen Winkel einschließen. Mit anderen Worten bilden Bruch und Spiegelfläche ein die Form eines "V". Insbesondere wird der Spiegel um 11° gekippt.

Zur Vereinfachung des Aufbaus sind alle Elemente des Sensorkopfes vorzugsweise zylindersymmetrisch ausgeführt. Der zylindrische Sensor wird dann in einen rechteckigen Block eingesetzt. Als Zuleitung fungiert beispielsweise ein Teflonschlauch von 3 - 5 mm Durchmesser, in dem die Glasfaser lose verlegt ist. Am Ende der Zuleitung befindet sich ein Stecker für Lichtwellenleiter, beispielsweise Typ FC-APC oder E-2000.

Bevorzugte, jedoch keinesfalls einschränkende Ausführungsbeispiele für die Erfindung werden nunmehr anhand der Figuren der Zeichnung näher erläutert. Dabei sind die Merkmale schematisiert und nicht notwendigerweise maßstabsgetreu dargestellt. Dabei zeigen
Figur 1 einen faseroptischen Beschleunigungssensor und
Figur 2 einen Ausschnitt des faseroptischen Beschleunigungssensors in vergrößerter Darstellung.

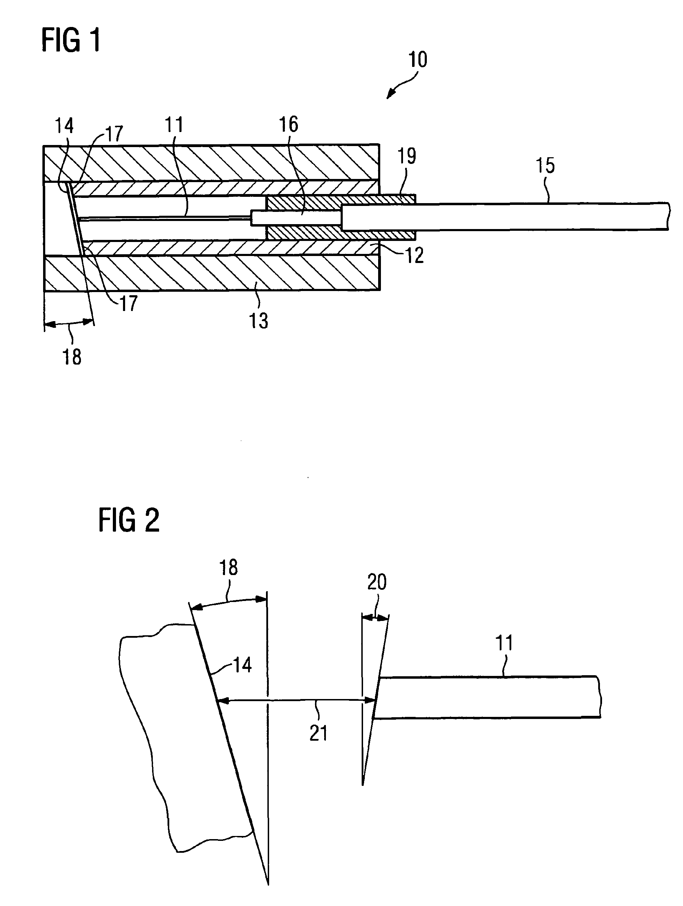

Der in Figur 1 gezeigte faseroptische Beschleunigungssensor 10 umfasst als ein wesentliches Element eine Glasfaser 11. Diese ist als Multimode-Faser 62/125 µm ausgeführt. Ein 16 mm langer Abschnitt der Glasfaser 11 ist freistehend. Am Ende dieses Abschnitts endet die Glasfaser 11. Im Anschluss an den freistehenden Abschnitt ist die Glasfaser 11 in einem Führungselement 16 fixiert. Im weiteren Verlauf ist die Glasfaser 11 lose in einem 3,7 mm durchmessenden Teflonschlauch 15 geführt.

Das Ende des Teflonschlauchs 15 ist zusammen mit dem Führungselement 16 von einer ersten Hülse 19 umfasst. Um die erste Hülse 19 ist eine zweite Hülse 12 vorgesehen. Die zweite Hülse 12 erstreckt sich vom Bereich der ersten Hülse über den freistehenden Abschnitt der Glasfaser 11 hinweg. Stirnseitig, d.h. dort, wo die Glasfaser 11 endet, findet die zweite Hülse 12 einen unter einem Winkel von 11° angeschrägten Abschluss, der sich bei der zylinderförmigen zweiten Hülse 12 in einem kreisringförmigen, angeschrägten Ende 17 zeigt. Die zweite Hülse 12 selbst ist an dieser Stelle offen, wird aber durch einen Al-Glas-Spiegel 14 abgeschlossen. Der Al-Glas-Spiegel 14 ist per Klebung auf dem abgeschrägten Ende befestigt, so dass der Al-Glas-Spiegel 14 selbst schräg zur Normal-Ebene der Faserachse angebracht ist.

Ein quaderförmiges Element 13 umschließt den bisher beschriebenen Aufbau von der Höhe des Al-Glas-Spiegel 14 bis zur ersten Hülse 19. Durch die Hülsen 19, 12 und das quaderförmige Element 13 sowie den Al-Glas-Spiegel 14 und das Führungselement 16 wird der freistehende Abschnitt der Glasfaser 11 völlig von der Außenwelt abgeschlossen, so dass keine Störeinflüsse von außen auf eine Messung wirken.

Eine vergrößerte, aber nicht maßstabsgetreue Darstellung des Endes der Glasfaser 11 in Relation zum Al-Glas-Spiegel 14 zeigt die Figur 2. Das dem Al-Glas-Spiegel 14 zugewandte Ende der Glasfaser 11 ist dabei durch einen Bruch abgeschrägt. Dadurch werden Rückreflexionen am Ende der Glasfaser 11 selbst stark verringert. Der Winkel 20 beträgt in diesem Beispiel 8°. Der Al-Glas-Spiegel 14, der in der gezeigten Vergrößerung in Figur 2 nicht mehr vollständig abgebildet ist, ist in einem Winkel 18 von 11° zur Normalebene der Glasfaserachse angeordnet. Der Abstand 12 zwischen dem Ende der Glasfaser 11 und dem Al-Glas-Spiegel 14 beträgt in diesem Beispiel 50 µm.

Die Abschrägungen vom Al-Glas-Spiegel 14 und der Glasfaser 11 sind so aufeinander ausgerichtet, dass sie den maximalen Winkel zueinander einschließen. Von der Seite betrachtet wie in Figur 2 bilden die Flächen durch ihre relative Lage dabei die Form eines "V".

## Patentansprüche

1. Faseroptischer Beschleunigungssensor (10) mit einer optischen Faser (11), die ein freistehendes Ende aufweist, das ausgebildet ist, unter dem Einfluss von Trägheitskräften ausgelenkt zu werden, **gekennzeichnet durch** einen in einem Abstand von zwischen 25 und 75 Mikrometern von dem freistehenden Ende der optischen Faser (11) angeordneten schräg gestellten Spiegel (14), der dazu ausgebildet ist, eine von einer Auslenkung des freistehenden Endes der optischen Faser (11) abhängige Lichtmenge in die optische Faser (11) zurück zu reflektieren, wobei als Schwungmasse nur das Eigengewicht der optischen Faser (11) dient.

2. Faseroptischer Beschleunigungssensor (10) gemäß Anspruch 1, bei dem die Länge des freistehenden Endes zwischen 12 und 18 mm beträgt, insbesondere zwischen 15 und 17 mm.

3. Faseroptischer Beschleunigungssensor (10) gemäß einem der vorangehenden Ansprüche mit einer optischen Faser (11) mit den Maßen 62/125 µm.

4. Faseroptischer Beschleunigungssensor (10) gemäß einem der vorangehenden Ansprüche, bei dem die Abschlussfläche des freistehenden Endes durch einen Bruch der optischen Faser (11) gebildet wird, der einen Winkel von zwischen 5° und 11°, insbesondere zwischen 7° und 9°, zur Ebene aufweist, die senkrecht auf der Faserachse steht.

5. Faseroptischer Beschleunigungssensor (10) gemäß einem der vorangehenden Ansprüche, bei dem der Spiegel (14) in einem Winkel von zwischen 9° und 13° zur Ebene ausgerichtet ist, die senkrecht auf der Faserachse steht.

6. Faseroptischer Beschleunigungssensor (10) gemäß einem der vorangehenden Ansprüche, bei dem der Bruch der optischen Faser (11) und der Spiegel (14) so zueinander ausgerichtet sind, dass die Faserabschlussfläche und der Spiegel (14) zusammen einen maximal möglichen Winkel einschließen.

## Claims

1. Fibre-optic acceleration sensor (10) having an optical fibre (11) which has a freestanding end which is embodied to be deflected under the influence of inertial forces, **characterised by** a mirror which is arranged inclined at an angle at a distance of between 25 and 75 micrometres from the freestanding end of the optical fibre (11) and which is embodied to reflect a quantity of light that is dependent on a deflection of the freestanding end of the optical fibre (11) back into the optical fibre (11), with only the net weight of the optical fibre (11) serving as a centrifugal mass.

2. Fibre-optic acceleration sensor (10) according to claim 1, wherein the length of the freestanding end is between 12 and 18 mm, in particular between 15 and 17 mm.

3. Fibre-optic acceleration sensor (10) according to one of the preceding claims, having an optical fibre (11) with the dimensions 62/125 µm.

4. Fibre-optic acceleration sensor (10) according to one of the preceding claims, wherein the terminating surface of the freestanding end is formed by a break of the optical fibre (11) having an angle of between 5° and 11°, in particular between 7° and 9°, to the plane which stands vertically on the fibre axis.

5. Fibre-optic acceleration sensor (10) according to one of the preceding claims, wherein the mirror (14) is aligned at an angle of between 9° and 13° to the plane which stands vertically on the fibre axis.

6. Fibre-optic acceleration sensor (10) according to one of the preceding claims, wherein the break of the optical fibre (11) and the mirror (14) are aligned with respect to one another such that the fibre terminating surface and the mirror (14) together include a maximum possible angle.

## Revendications

1. Capteur ( 10 ) d'accélération à fibre optique comprenant une fibre ( 11 ) optique qui a une extrémité libre constituée pour être déviée sous l'influence de forces d'inertie, **caractérisé par** un miroir ( 14 ) mis en biais à une distance comprise entre 25 et 75 microns de l'extrémité libre de la fibre ( 11 ) optique et constitué pour réfléchir dans la fibre ( 11 ) optique une quantité de lumière qui dépend d'une déviation de l'extrémité libre de la fibre ( 11 ) optique, seul le poids propre de la fibre ( 11 ) optique servant de masse vibrante.

2. Capteur ( 10 ) d'accélération à fibre optique suivant la revendication 1, dans lequel la longueur de l'extrémité libre est comprise entre 12 et 18 mm, notamment entre 15 et 17 mm.

3. Capteur ( 10 ) d'accélération à fibre optique suivant l'une des revendications précédentes, comprenant une fibre ( 11 ) optique ayant les dimensions 62/125 µm.

4. Capteur ( 10 ) d'accélération à fibre optique suivant l'une des revendications précédentes, dans lequel la surface de fin de l'extrémité libre est formée par une cassure de la fibre ( 11 ) optique, qui fait un angle compris entre 5°, 11°, notamment entre 7° et 9°, avec le plan perpendiculaire à l'axe de la fibre.

5. Capteur ( 10 ) d'accélération à fibre optique suivant l'une des revendications précédentes, dans lequel le miroir ( 14 ) fait un angle compris entre 9° et 13° avec le plan perpendiculaire à l'axe de la fibre.

6. Capteur ( 10 ) d'accélération à fibre optique suivant l'une des revendications précédentes, dans lequel la cassure de la fibre ( 11 ) optique et le miroir ( 14 ) sont orientés l'un par rapport à l'autre de manière à ce que la surface de fin de la fibre et du miroir 14 fassent ensemble l'angle maximum possible.
